# EUROPÄISCHE PATENTSCHRIFT

(11) **EP 3 743 296 B1**
(45) Veröffentlichungstag und Bekanntmachung des Hinweises auf die Patenterteilung: **14.06.2023**
(21) Anmeldenummer: 18812064.6
(22) Anmeldetag: 12.11.2018
(51) Int. Cl.: B60C 19/12, B29C 73/22, B29D 30/06, B60C 5/14

(54) **SELBSTABDICHTENDER FAHRZEUGLUFTREIFEN MIT DICHTMITTELLAGE**
SELF-SEALING VEHICLE PNEUMATIC TYRE COMPRISING A SEALANT LAYER
PNEUMATIQUE DE VÉHICULE À ÉTANCHÉITÉ INTRINSÈQUE DOTÉ D'UNE COUCHE INTÉRIEURE COLMATANTE

(30) Priorität: 24.01.2018 DE 102018201044
(43) Veröffentlichungstag der Anmeldung: 02.12.2020
(73) Patentinhaber: Continental Reifen Deutschland GmbH, 30165 Hannover (DE)
(72) Erfinder: DOROSHENKO, Mikheil, 30419 Hannover (DE); TYBURSKI, Andreas, 30419 Hannover (DE)
(74) Vertreter: Continental Corporation
(86) Internationale Anmeldenummer: PCT/EP2018/080874
(87) Internationale Veröffentlichungsnummer: WO 2019/145060

(56) Entgegenhaltungen:
- WO-A1-2017/094447
- DE-A1-102008 003 554
- US-A1- 2016 167 455

## Beschreibung

Die Erfindung betrifft einen selbstabdichtenden Fahrzeugluftreifen mit Dichtmittellage.

Selbstabdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper (das Einstichobjekt) vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel zeichnet sich durch Luftdichtigkeit, starke Klebrigkeit und ausgewogenes Fließverhalten aus.

Die US 2016/167455 A1 offenbart einen Reifen mehreren inneren Dichtmittelschichten und insbesondere Reifen mit mehreren eingebauten Dichtmittelschichten, von denen mindestens eine aus Dichtmittelvorläuferschichten gebildet ist. Die Reihenfolge der Schichten, von der äußersten zur innersten, umfasst: eine Laufflächenschicht, gefolgt von einer herkömmlichen Reifenkarkasse (einschließlich Lage und Gürtel), dann einem Innenliner, der äußeren Dichtungsschicht, der inneren Dichtungsschicht und eine schützende Deckschicht als innerste Schicht.

Ferner beschreibt die WO 2017/094447 A1 einen Luftreifen mit einem Dichtungsmaterial. Der Luftreifen weist eine Dichtungsschicht mit zwei oder mehr Dichtungsmaterialien auf, die so gemischt sind, dass sie eine unterschiedliche Temperaturempfindlichkeit aufweisen.

Außerdem offenbart die DE 102008003554 A1 einen Luftreifen für ein Fahrzeug, der aus mehreren Lagen aus Kautschukelastomeren und Festigkeitsträgern aufgebaut ist und eine selbsttätig abdichtende Dichtmittellage aufweist. Der Fahrzeugluftreifen mit selbsttätig abdichtender Dichtmittellage weist wenigstens zwei Dichtmittelschichten unterschiedlicher Härte auf, die jeweils aus einem visko-elastischen Material bestehen.

Allerdings ist es eine Herausforderung, das Dichtmittel so zu gestalten, dass es bei unterschiedlichen Witterungsbedingungen, insbesondere bei kalten und bei sehr heißen Temperaturen, die gleiche Abdichtwirkung und damit eine ausreichende Fließfähigkeit bei gleichzeitiger Ortsfestigkeit aufweist.

Der vorliegenden Erfindung liegt daher die Aufgabe zugrunde, einen selbstabdichtenden Fahrzeugluftreifen, bereitzustellen, der insbesondere sowohl bei geringen Außentemperaturen (z. B. -20 bis +10 °C) als auch bei hohen Außentemperaturen (z. B. 20 bis 45 °C) eine ausreichend gute Abdichtung im Pannenfall zeigt. Insbesondere soll nach dem Entfernen des Einstichobjektes kein Dichtmittel aus dem Reifen ausfließen.

Gelöst wird diese Aufgabe dadurch, dass der selbstabdichtende Fahrzeugluftreifen wenigstens eine erste auf der dem Laufstreifen gegenüberliegenden Innenfläche angeordnete Dichtmittellage und wenigstens eine zweite Dichtmittellage umfasst, wobei die erste und die zweite Dichtmittellage radial benachbart zueinander angeordnet sind, und wobei die erste und die zweite Dichtmittellage hinsichtlich der dynamischen Scherviskosität bei 100 °C unterschiedliche Dichtmittel aufweisen.

Dadurch, dass der selbstabdichtende Fahrzeugluftreifen wenigstens ein erstes Dichtmittel und wenigstens ein zweites Dichtmittel mit unterschiedlichen Viskositäten aufweist, ist eine zuverlässige Abdichtung bei unterschiedlichen Temperaturen möglich, ohne dass zu viel Dichtmittel aus dem Reifen nach außen austritt.

Beispielsweise fließt bei niedrigen bis moderaten Temperaturen im Pannenfall überwiegend das Dichtmittel mit der niedrigeren Viskosität in die Einstichstelle. Gleichzeitig fließt aber auch das höherviskose Dichtmittel in die Einstichstelle und verhindert im Fall des Entfernens des Einstichobjektes durch die höhere Viskosität das Ausfließen des niedrigviskosen Dichtmittels aus dem Reifen.

Hohe Temperaturen können beispielsweise zu einer erhöhten Beweglichkeit der Reifenkomponenten und auch des Einstichobjektes führen und damit Deformationen der Einstichstelle verursachen. Auch hier ist die Kombination aus Dichtmitteln unterschiedlicher Viskositäten vorteilhaft. Insbesondere das Dichtmittel mit der geringeren Viskosität kann den Bewegungen des Einstichobjektes folgen und die Einstichstelle somit trotz Deformationen abdichten.

Unter "Viskosität" wird im Rahmen der vorliegenden Erfindung die dynamische Scherviskosität bei 100 °C betrachtet, sofern nichts anderes angegeben ist. Die Messung der dynamischen Scherviskosität bei 100 °C erfolgt mittels eines Rheometers (HAAKE RheoStress 6000 der Firma Thermo Scientific, "Measuring plate cover" MPC20) mit einer Frequenz von 0,02 Hz.

Gemäß der Erfindung weist die erste Dichtmittellage eine höhere Viskosität auf als die zweite Dichtmittellage, wobei die erste Dichtmittellage radial außerhalb der zweiten Dichtmittellage angeordnet ist.

"Radial außerhalb" bedeutet in radialer Richtung nach außen, also in Richtung des Laufstreifens, der die radial äußerste Schicht des Fahrzeugluftreifens darstellt.

Die erste Dichtmittellage ist somit zwischen der innersten Schicht des Fahrzeugluftreifens, meist der luftdicht ausgeführten Innenschicht, und der zweiten Dichtmittellage angeordnet. Hierdurch kann ein Herausfließen von Dichtmitteln aus dem Reifen nach außen besonders gut verhindert werden. Das Dichtmittel mit der höheren Viskosität ist dabei nahe an der Einstichstelle und kann somit gut verhindern, dass das Dichtmittel mit der niedrigeren Viskosität aus dem Reifen ausfließt. Gleichzeitig kann aber das niedrigviskosere Dichtmittel an dem höherviskosen Dichtmittel vorbei in die Einstichstelle fließen.

Der Unterschied der Viskositäten der Dichtmittel der ersten und der zweiten Dichtmittellage beträgt, bezogen auf die jeweilige Viskosität des Dichtmittels mit der geringeren Viskosität, erfindungsgemäß 50 bis 150 %.

Hiermit ist gemeint, dass die Viskosität der ersten Dichtmittellage beispielsweise um 50 % oder um 150 % größer ist als die Viskosität der zweiten Dichtmittellage; beispielsweise weist die zweite Dichtmittellage eine Viskosität von 10000 Pa*s auf. Die erste Dichtmittellage weist bei einer 50 % höheren Viskosität dann eine Viskosität von 15000 Pa*s auf; bei einer 150 % höheren Viskosität beispielsweise eine Viskosität von 25000 Pa*s.

Gemäß einer vorteilhaften Weiterbildung weist der erfindungsgemäße Fahrzeugluftreifen drei oder mehr Dichtmittellagen auf, wobei jeweils in radialer Richtung benachbarte Dichtmittel unterschiedliche Viskositäten aufweisen. Bevorzugt beträgt der Unterschied der Viskositäten von jeweils benachbarten Dichtmittellagen 5 bis 400 % bezogen auf die jeweilige Viskosität des Dichtmittels mit der geringeren Viskosität, besonders bevorzugt 20 bis 250 %, ganz besonders bevorzugt 50 bis 150 %.

Gemäß einer vorteilhaften Weiterbildung weist der erfindungsgemäße Fahrzeugluftreifen drei Dichtmittellagen auf, wobei jeweils in radialer Richtung benachbarte Dichtmittel unterschiedliche Viskositäten aufweisen und der Unterschied der Viskositäten von jeweils benachbarten Dichtmittellagen 5 bis 400 % bezogen auf die jeweilige Viskosität des Dichtmittels mit der geringeren Viskosität, besonders bevorzugt 20 bis 250 %, ganz besonders bevorzugt 50 bis 150 % beträgt.

Gemäß einer vorteilhaften Weiterbildung weist der erfindungsgemäße Fahrzeugluftreifen vier Dichtmittellagen auf, wobei jeweils in radialer Richtung benachbarte Dichtmittel unterschiedliche Viskositäten aufweisen und der Unterschied der Viskositäten von jeweils benachbarten Dichtmittellagen 5 bis 400 % bezogen auf die jeweilige Viskosität des Dichtmittels mit der geringeren Viskosität, besonders bevorzugt 20 bis 250 %, ganz besonders bevorzugt 50 bis 150 % beträgt.

Bevorzugt beträgt die Gesamtdicke aller Dichtmittellagen in radialer Richtung von 2 bis 10 mm, besonders bevorzugt 2 bis 8 mm, ganz besonders bevorzugt 4 bis 5 mm.

Die Gesamtdicke wird dabei in radialer Richtung senkrecht zur axialen Richtung gemessen.

Die Dichtmittellagen mit den unterschiedlichen Viskositäten können sämtliche Dickenverhältnisse untereinander aufweisen. Beispielsweise kann im Fall von zwei Dichtmittellagen das Verhältnis der Dicken der ersten Lage zur Dicke der zweiten Lage 10 zu 90 bis 90 zu 10, insbesondere 20 zu 80 bis 80 zu 20 betragen. Beispielsweise können die erste und die zweite Dichtmittellage auch gleich oder nahezu gleich dick sein, wobei das genannte Verhältnis dann 40 zu 60 bis 60 zu 40, insbesondere 50 zu 50 beträgt.

Gemäß einer vorteilhaften Ausführungsform der Erfindung beträgt die Viskosität (bei 100 °C) der ersten Dichtmittellage 1000 bis 40000 Pa*s (Pascal mal Sekunde) und die Viskosität (bei 100 °C) der zweiten Dichtmittellage 300 bis 20000 Pa*s, wobei die erste Dichtmittellage eine um 50 bis 150 % höhere Viskosität aufweist als die zweite Dichtmittellage.

Gemäß einer vorteilhaften Ausführungsform der Erfindung beträgt die Viskosität (bei 100 °C) der ersten Dichtmittellage 4000 bis 20000 Pa*s (Pascal mal Sekunde) und die Viskosität (bei 100 °C) der zweiten Dichtmittellage 300 bis 10000 Pa*s, wobei die obigen Verhältnisse der Viskositätsunterschiede gelten.

Mit Dichtmitteln der Dichtmittellagen in den genannten Viskositätsbereichen wird in einem sehr breiten Temperaturbereich, beispielsweise von -20 °C bis +45 °C, eine ausreichend gute Abdichtwirkung im Pannenfall erzielt. Gleichzeitig fließt im Fall des Entfernens des Einstichobjektes kein Dichtmittel aus dem Reifen heraus.

Bevorzugt umfasst die erste und/oder die zweite Dichtmittellage ein Dichtmittel, welches auf der Vernetzung eines Kautschuks und/oder Polyolefins basiert. Es ist aber auch denkbar, dass andere Zusammensetzungen als Dichtmittel verwendet werden.

Im Fall von drei oder mehr Dichtmittellagen ist es gemäß einer vorteilhaften Ausführungsform der Erfindung ebenfalls bevorzugt, wenn wenigstens eine, bevorzugt wenigstens zwei, bevorzugt wenigstens drei, besonders bevorzugt sämtliche, der Dichtmittelagen auf der Vernetzung eines Kautschuks und/oder Polyolefins basieren. Auch hier ist jedoch jegliche Kombination mit anderen Dichtmitteln in einer oder mehrerer der Dichtmittellagen denkbar.

Gemäß einer vorteilhaften Ausführungsform der Erfindung umfassen die erste und die zweite Dichtmittellage ein Dichtmittel, welches auf der Vernetzung eines Kautschuks und/oder Polyolefins basiert.

Die Zusammensetzungen können dabei prinzipiell die gleichen Bestandteile umfassen, solange die zueinander in benachbarten Dichtmittellagen angeordneten Dichtmittel unterschiedliche Viskositäten aufweisen.

Im Folgenden werden die möglichen und bevorzugten Bestandteile eines Dichtmittels, welches auf der Vernetzung eines Kautschuks und/oder Polyolefins basiert, erläutert.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR).

Diese Kautschuktypen sind für die Verarbeitungstemperaturen bei der Herstellung des Reifendichtmittels und später bei der Anwendung im Reifen besonders gut geeignet. Besonders bevorzugt wird wenigstens Butylkautschuk (IIR) verwendet. Butylkautschuk eignet sich besonders gut, da er eine vergleichsweise hohe Luftdichtigkeit aufweist.

Das wenigstens eine Polyolefin weist bevorzugt ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.

Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mn von 400 bis 2500 g/mol handeln, wobei sich die Polybutene im Mn unterscheiden können. Geeignete Polybutene, auch Polyisobutene genannt, sind beispielsweise unter den Handelsnamen Indopol^{®} Polybutene der Firma INEOS Capital Limited erhältlich.

Es ist auch ein Gemisch wenigstens eines Polybutens mit wenigstens einem weiteren Polyolefin denkbar.

Dem Fachmann ist klar, dass die genannten Bestandteile im vernetzten Dichtmittel zumindest teilweise in chemisch veränderter Form, insbesondere als Derivate, vorliegen.

Bevorzugt basiert das Dichtmittel auf der Vernetzung durch wenigstens einen Vernetzer, der ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Bevorzugt basiert das Dichtmittel auf der Vernetzung durch wenigstens einen Vernetzer in Kombination mit einem Vernetzungsinitiator, wobei der Vernetzungsinitiator bevorzugt ausgewählt aus der Gruppe enthaltend Bleioxid und andere Metalloxide und peroxidische Verbindungen. Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind.

Das Dichtmittel kann ferner weitere Bestandteile enthalten, wie insbesondere Füllstoff(e), Klebrigmacher, Weichmacher, wie z. B. Öl(e), sowie gegebenenfalls weitere Zusatzstoffe, wie z. B. Farbpigmente und/oder Zinkoxid und/oder Schwefel.

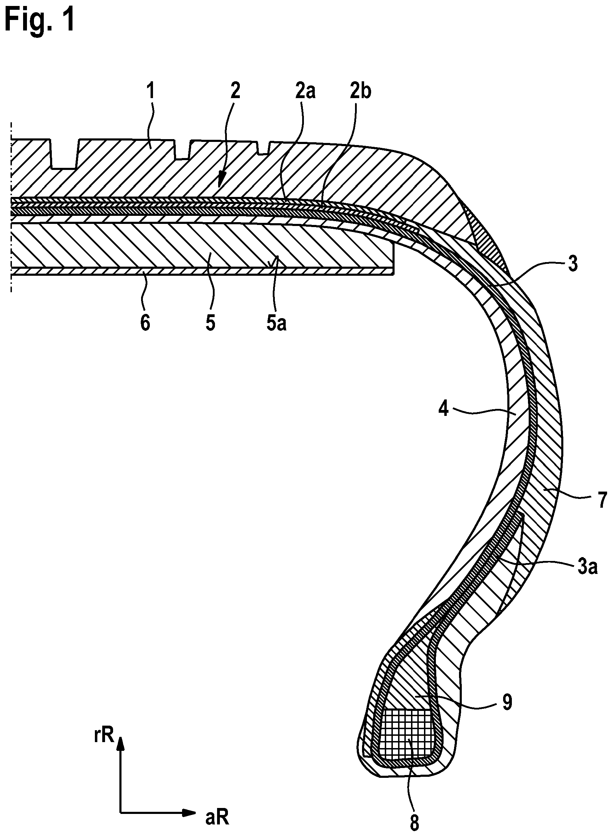

Weitere Einzelheiten der Erfindung werden anhand der Figur 1, die ein schematisches Ausführungsbeispiel darstellt, näher erläutert.

Die wesentlichen Bestandteile, aus welchen sich der erfindungsgemäße Fahrzeugluftreifen zusammensetzt, sind ein profilierter Laufstreifen 1, ein bei der gezeigten Ausführung aus zwei Lagen 2a, 2b bestehendes Gürtelpaket 2, eine einlagige Karkasse 3, welche um die Wulstkerne 8 und Wulstkernprofile 9 von axial innen nach axial außen herumgeführt ist und im Karkasshochschlag 3a endet, sowie Seitenwände 7. Die beiden Lagen 2a, 2b des Gürtelpakets 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 15° und 45° einschließen. Auch die einlagige Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Selbstdichtung des Fahrzeugluftreifens ist beim erfindungsgemäßen Beispiel durch zwei nach der Vulkanisation des Fahrzeugluftreifens nachträglich radial innen umlaufend aufgebrachte Dichtmittellagen 5 und 6 erhalten. Die erste Dichtmittellage 5 weist im Wesentlichen die Breite des Gürtelpakets 2 auf und ist im Wesentlichen in dessen Projektion angeordnet und weist einen in der die Reifenachse beinhaltenden Querschnittsebene ausgebildeten Querschnitt mit einer radial nach innen gerichteten in axialer Richtung, im Wesentlichen parallel zum Gürtelpaket, verlaufende Oberfläche 5a auf.

Gemäß des Beispiels in Figur 1 ist radial innerhalb der Dichtmittellage 5, also auf der radial nach innen gerichteten Oberfläche 5a der Dichtmittellage 5, eine zweite Dichtmittellage 6 angeordnet.

Die erste Dichtmittellage 5 weist beispielsweise eine dynamische Scherviskosität von 8000 Pa*s bei 100 °C auf. Die zweite Dichtmittellage 6 weist beispielsweise eine dynamische Scherviskosität von 5000 Pa*s bei 100 °C auf. Die erste Dichtmittellage 5 weist damit eine um 60 % höhere Viskosität auf als die zweite Dichtmittellage 6 bezogen auf die Viskosität der zweiten Dichtmittellage.

### Bezugszeichenliste

### (Teil der Beschreibung)

- 1: Laufstreifen
- 2: Gürtelpaket
- 2a: Gürtellage
- 2b: Gürtellage
- 3: Karkasse
- 3a: Karkasshochschlag
- 4: Innenschicht
- 5: Erste Dichtmittellage
- 5a: radial nach innen gerichtete in axialer Richtung, im Wesentlichen parallel zum Gürtelpaket, verlaufende Oberfläche der ersten Dichtmittellage
- 6: Zweite Dichtmittellage
- 7: Seitenwand
- 8: Wulstkern
- 9: Wulstkernprofil

- rR: radiale Richtung
- aR: axiale Richtung

## Patentansprüche

1. Selbstabdichtender Fahrzeugluftreifen umfassend wenigstens eine erste auf der dem Laufstreifen (1) gegenüberliegenden Innenfläche angeordnete Dichtmittellage (5) und wenigstens eine zweite Dichtmittellage (6), wobei die erste und die zweite Dichtmittellage radial benachbart zueinander angeordnet sind, und wobei die erste und die zweite Dichtmittellage hinsichtlich der dynamischen Scherviskosität bei 100 °C und einer Frequenz von 0,02 Hz unterschiedliche Dichtmittel aufweisen, wobei die erste Dichtmittellage (5) eine höhere Viskosität aufweist als die zweite Dichtmittellage (6), wobei die erste Dichtmittellage (5) radial außerhalb der zweiten Dichtmittellage (6) angeordnet ist, wobei der Unterschied der Viskositäten bezogen auf die Viskosität des Dichtmittels mit der geringeren Viskosität 50 bis 150 % beträgt.

2. Fahrzeugluftreifen nach einem der vorherigen Ansprüche, **dadurch gekennzeichnet, dass** er drei oder mehr Dichtmittellagen aufweist, wobei jeweils in radialer Richtung benachbarte Dichtmittel unterschiedliche Viskositäten aufweisen.

3. Fahrzeugluftreifen nach einem der vorherigen Ansprüche, **dadurch gekennzeichnet, dass** die Gesamtdicke aller Dichtmittellagen in radialer Richtung von 2 bis 10 mm, besonders bevorzugt 2 bis 8 mm, ganz besonders bevorzugt 4 bis 5 mm, beträgt.

4. Fahrzeugluftreifen nach einem der vorherigen Ansprüche, **dadurch gekennzeichnet, dass** die Viskosität der ersten Dichtmittellage 1000 bis 40000 Pa*s und die Viskosität der zweiten Dichtmittellage 300 bis 20000 Pa*s beträgt, wobei die erste Dichtmittellage eine um 50 bis 150 % höhere Viskosität aufweist als die zweite Dichtmittellage.

5. Fahrzeugluftreifen nach einem der vorherigen Ansprüche, **dadurch gekennzeichnet, dass** die erste und/oder die zweite Dichtmittellage ein Dichtmittel umfasst, welches auf der Vernetzung eines Kautschuks und/oder Polyolefins basiert.

## Claims

1. Self-sealing pneumatic vehicle tire comprising at least one first sealant layer (5) arranged on the inner surface opposite the tread (1) and at least one second sealant layer (6), wherein the first and the second sealant layer are arranged radially adjacent to one another and wherein the first and the second sealant layer comprise sealants which differ in terms of their dynamic shear viscosity at 100°C and a frequency of 0.02 Hz, wherein the first sealant layer (5) has a higher viscosity than the second sealant layer (6), wherein the first sealant layer (5) is arranged radially outward of the second sealant layer (6), wherein the difference in viscosities based on the viscosity of the sealant having the lower viscosity is 50% to 150%.

2. Pneumatic vehicle tire according to one of the preceding claims, **characterized in that** it comprises three or more sealant layers, wherein respectively radially adjacent sealants have different viscosities.

3. Pneumatic vehicle tire according to one of the preceding claims, **characterized in that** the total thickness of all sealant layers in the radial direction is from 2 to 10 mm, particularly preferably 2 to 8 mm, very particularly preferably 4 to 5 mm.

4. Pneumatic vehicle tire according to one of the preceding claims, **characterized in that** the viscosity of the first sealant layer is 1000 to 40 000 Pa*s and the viscosity of the second sealant layer is 300 to 20 000 Pa*s, wherein the first sealant layer has a viscosity 50% to 150% higher than the second sealant layer.

5. Pneumatic vehicle tire according to one of the preceding claims, **characterized in that** the first and/or the second sealant layer comprises a sealant based on the crosslinking of a rubber and/or polyolefin.

## Revendications

1. Pneumatique auto-colmatant de véhicule, comprenant au moins une première couche d'agent colmatant (5) disposée sur la surface interne opposée à la bande de roulement (1) et au moins une deuxième couche d'agent colmatant (6), les première et deuxième couches d'agents colmatants étant disposées en étant contiguës radialement l'une à l'autre et les première et deuxième couches d'agents colmatants comportant des agents colmatants qui diffèrent en ce qui concerne la viscosité de cisaillement dynamique à 100 °C et à une fréquence de 0,02 Hz, la première couche d'agent colmatant (5) présentant une viscosité supérieure à celle de la deuxième couche d'agent colmatant (6), la première couche d'agent colmatant (5) étant disposée à l'extérieur radialement de la deuxième couche d'agent colmatant (6), la différence des viscosités valant de 50 à 150 % par rapport à la viscosité de l'agent colmatant ayant la plus faible viscosité.

2. Pneumatique de véhicule selon l'une quelconque des revendications précédentes, **caractérisé en ce qu'**il comporte trois ou plus de trois couches d'agents colmatants, les agents colmatants contigus en direction radiale présentant chaque fois des viscosités différentes.

3. Pneumatique de véhicule selon l'une quelconque des revendications précédentes, **caractérisé en ce que** l'épaisseur totale de toutes les couches d'agents colmatants en direction radiale vaut de 2 à 10 mm, de façon particulièrement préférée 2 à 8 mm, de façon tout particulièrement préférée 4 à 5 mm.

4. Pneumatique de véhicule selon l'une quelconque des revendications précédentes, **caractérisé en ce que** la viscosité de la première couche d'agent colmatant vaut de 1 000 à 40 000 Pa*s et la viscosité de la deuxième couche d'agent colmatant vaut de 300 à 20 000 Pa*s, la première couche d'agent colmatant présentant une viscosité supérieure de 50 à 150 % à celle de la deuxième couche d'agent colmatant.

5. Pneumatique de véhicule selon l'une quelconque des revendications précédentes, **caractérisé en ce que** la première et/ou la deuxième couche d'agent colmatant comprend/comprennent un agent colmatant qui est basé sur la réticulation d'un caoutchouc et/ou d'une polyoléfine.
